# EUROPEAN PATENT APPLICATION

(11) **EP 4 656 482 A1**
(43) Date of publication of application: **03.12.2025**
(21) Application number: 25177246.3
(22) Date of filing: 19.05.2025
(51) Int. Cl.: B60W 30/16, B60W 30/18, B60W 50/14, B60W 60/00

(54) **DRIVING ASSISTANCE DEVICE THAT ASSISTS DRIVING WHEN ENTERING A ROUNDABOUT, METHOD AND PROGRAM**

(30) Priority: 29.05.2024 JP 2024087491
(71) Applicant: TOYOTA JIDOSHA KABUSHIKI KAISHA, Toyota-shi Aichi 471-8571 (JP)
(72) Inventor: KAMIJO, Kentaro, TOYOTA-SHI, AICHI, 471-8571 (JP)
(74) Representative: Cabinet Beau de Loménie

(57) **Abstract**

A driving assistance device (100) that includes an electronic control unit (10) that is configured to execute driving assistance control, when the own vehicle (102) enters a roundabout (110), by acquiring information on the roundabout (110) in front of the own vehicle (102) and determining whether or not the own vehicle (102) can enter the roundabout (110) based on acquired information on the roundabout (110) and information on the objects acquired by an object information acquisition device (18), and notifying a driver of a result of the determination, in which the electronic control unit (10) is configured to estimate a travel time (Tₒ) required for the own vehicle (102) to reach an entry position (Pe) of the roundabout (110), estimate another travel time (T₁) required for a first other vehicle traveling in the roundabout to reach the entry position (Pe), and determine whether or not the own vehicle (102) can enter the roundabout (110) based on a relationship between the travel times.

## Description

### BACKGROUND OF THE INVENTION

### 1. Field of the Invention

This invention relates to driving assistance for vehicles such as automobiles, and more specifically to a driving assistance device that assists driving when an own vehicle enters a roundabout, method and program.

### 2. Description of the Related Art

As a driving assistance device that assists a driver when an own vehicle enters a roundabout, there is a known driving assistance device that determines status of other vehicles traveling in the roundabout, and determines whether or not the own vehicle can enter the roundabout based on the determination results.

For example, Japanese Patent Application Laid-open Publication No. 2022-173452 describes a system that, when an own vehicle reaches a roundabout, determines whether or not other vehicles traveling in the roundabout are aggressive, and if they are, the own vehicle slows down so that the other vehicles can pass in front of the own vehicle.

According to conventional driving assistance devices such as the driving assistance device described in the above Publication, a risk of collision with another vehicle traveling in a roundabout can be reduced when an own vehicle enters the roundabout.

However, since the determination of whether or not other vehicles traveling in the roundabout are aggressive is made when the own vehicle has reached the roundabout, it is not possible to make a determination on whether or not to enter the roundabout early in a process of the own vehicle approaching the roundabout.

### SUMMARY

The present invention provides a driving assistance device, method and program that can determine whether or not to enter a roundabout earlier than conventional arts by determining a relationship between times required for other vehicles and the own vehicle to reach an entry position of the roundabout.

According to the present invention, a driving assistance device is provided, which includes an object information acquisition device that acquires information on objects in front of an own vehicle and an electronic control unit that is configured to execute driving assistance control when the own vehicle enters a roundabout in front of the own vehicle by acquiring information on the roundabout and determining whether or not the own vehicle can enter the roundabout based on acquired information on the roundabout and information on the objects acquired by the object information acquisition device, and notifying a driver of a result of the determination.

The electronic control unit is configured to estimate a first travel time required for the own vehicle to reach an entry position to the roundabout, to estimate a second travel time required for a first other vehicle traveling in the roundabout to reach the entry position, and to determine whether or not the own vehicle can enter the roundabout based on a relationship between the first and second travel times.

In addition, according to the present invention, a driving assistance method for executing driving assistance control when an own vehicle enters a roundabout is provided that includes: acquiring information on a roundabout in front of the own vehicle; acquiring information on objects in front of the own vehicle; determining whether or not the own vehicle can enter the roundabout based on acquired information on the roundabout and objects; and notifying a driver of a result of the determination.

The driving assistance method further includes: estimating a first travel time required for the own vehicle to reach a entry position to the roundabout, estimating a second travel time required for a first other vehicle traveling in the roundabout to reach the entry position, and determining whether or not the own vehicle can enter the roundabout based on a relationship between the first and second travel times.

Furthermore, according to the present invention, a non-transitory computer-readable storage medium storing a program is provided that causes a computer installed on an own vehicle to execute driving assistance control when the own vehicle enters a roundabout by executing: acquiring information on a roundabout in front of the own vehicle; acquiring information on objects in front of the own vehicle; determining whether or not the own vehicle can enter the roundabout based on acquired information on the roundabout and objects; and notifying a driver of a result of the determination.

The program further includes: estimating a first travel time required for the own vehicle to reach a entry position to the roundabout, estimating a second travel time required for a first other vehicle traveling in the roundabout to reach the entry position, and determining whether or not the own vehicle can enter the roundabout based on a relationship between the first and second travel times.

According to the above driving assistance device, method and program, the first travel time required for the own vehicle to reach the entry position to the roundabout is estimated, the second travel time required for the first other vehicle traveling in the roundabout to reach the entry position is estimated, and a determination is made as to whether or not the own vehicle can enter the roundabout based on a relationship between the first and second travel times.

Therefore, when the own vehicle approaches the entry position to the roundabout, it is possible to determine whether or not the own vehicle can enter the roundabout based on the relationship between the travel times required for the own vehicle and the other vehicle to reach the entry position to the roundabout. Therefore, it is possible to determine whether or not to enter the roundabout earlier than when a determination is made as to whether or not other vehicles are aggressive when the own vehicle reaches the roundabout, and a determination as to whether or not to enter the roundabout is made based on the result of that determination.

In one aspect of the present invention, the electronic control unit is configured to determine that the own vehicle can enter the roundabout after the first other vehicle has passed the entry position, when the first travel time is greater than a sum of the second travel time and a first margin time.

In another aspect of the present invention, the electronic control unit is configured to determine that the own vehicle can enter the roundabout before the first other vehicle passes the entry position, when the first travel time is less than a difference between the second travel time and a second margin time.

In another aspect of the present invention, the electronic control unit is configured to determine that the own vehicle cannot enter the roundabout, when the first travel time is greater than or equal to the difference between the second travel time and the second margin time and less than or equal to the sum of the second travel time and the first margin time.

In another aspect of the present invention, the electronic control unit is configured to determine whether or not the own vehicle can enter the roundabout, when the first travel time is less than or equal to a reference value.

In another aspect of the present invention, the electronic control unit is configured, when the electronic control unit determines that there is an obstacle in an island of the roundabout that prevents the object information acquisition device from acquiring information and that there is another vehicle as the first other vehicle that has entered a shielded area where acquisition of information is prevented by the obstacle, based on the acquired information on the roundabout or the information on objects acquired by the object information acquisition device, to estimate the second travel time for the first other vehicle that has entered the shielded area based on the information acquired by the object information acquisition device before the first other vehicle enters the shielded area.

In another aspect of the present invention, the electronic control unit is configured to determine that the own vehicle can enter the roundabout after the first other vehicle has passed the entry position, when the first travel time is greater than the sum of the second travel time and the first margin time and there is no other vehicle in the roundabout other than the first other vehicle.

In another aspect of the present invention, the electronic control unit is configured, when there is another vehicle following the first other vehicle as a second other vehicle in the roundabout, to estimate a third travel time required for the second other vehicle to reach the entry position, and to determine that the own vehicle can enter the roundabout after the first other vehicle has passed the entry position and before the second other vehicle passes the entry position, when the first travel time is less than a difference between the third travel time and the second margin time.

In another aspect of the present invention, the own vehicle has an automatic brake device, and the electronic control unit is configured to decelerate the own vehicle using the automatic brake device, when the first travel time is greater than or equal to the difference between the second travel time and the second margin time and less than or equal to the sum of the second travel time and the first margin time, and to determine that the own vehicle can enter the roundabout after the first other vehicle has passed the entry position, when the first travel time becomes greater than the sum of the second travel time and the first margin time.

In another aspect of the present invention, the own vehicle has an automatic brake device, and the electronic control unit is configured to determine that the own vehicle cannot enter the roundabout and to decelerate the own vehicle using the automatic brake device, when the first travel time is greater than or equal to the difference between the third travel time and the second margin time.

In another aspect of the present invention, the electronic control unit is configured to determine that the own vehicle can enter the roundabout after the first other vehicle and the second other vehicle have passed the entry position, when the first travel time becomes greater than a sum of the third travel time and the first margin time, in a situation where the own vehicle is decelerated by the automatic brake device.

In another aspect of the present invention, the electronic control unit is configured not to determine whether or not the own vehicle can enter the roundabout, when there is a preceding vehicle between the own vehicle and the roundabout.

In this application, "the first other vehicle" is the other vehicle with the shortest travel time to reachthe entry position where the own vehicle enters the roundabout, when there are multiple other vehicles in the roundabout. In addition, "the first other vehicle" is the single other vehicle when there is only one other vehicle in the roundabout.

Other objects, other features and attendant advantages of the present invention will be readily understood from the description of the embodiment of the present invention described with reference to the following drawings.

### BRIEF DESCRIPTION OF THE DRAWINGS

FIG. 1 is a schematic diagram showing an embodiment of the driving assistance device according to the present invention.

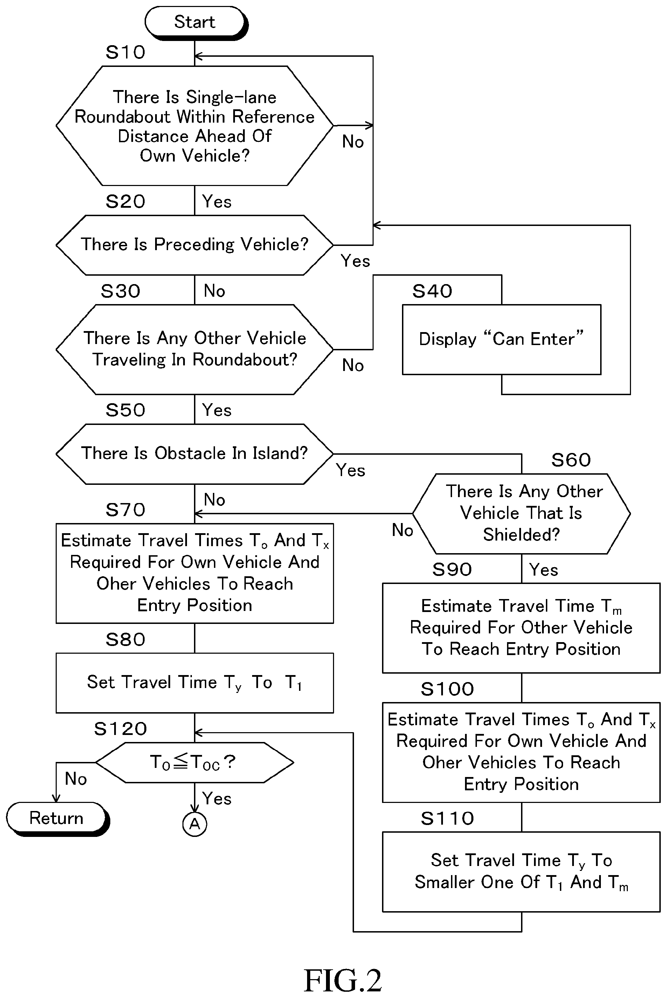

FIG. 2 is a flowchart corresponding to the first part of the driving assistance control program in the embodiment.

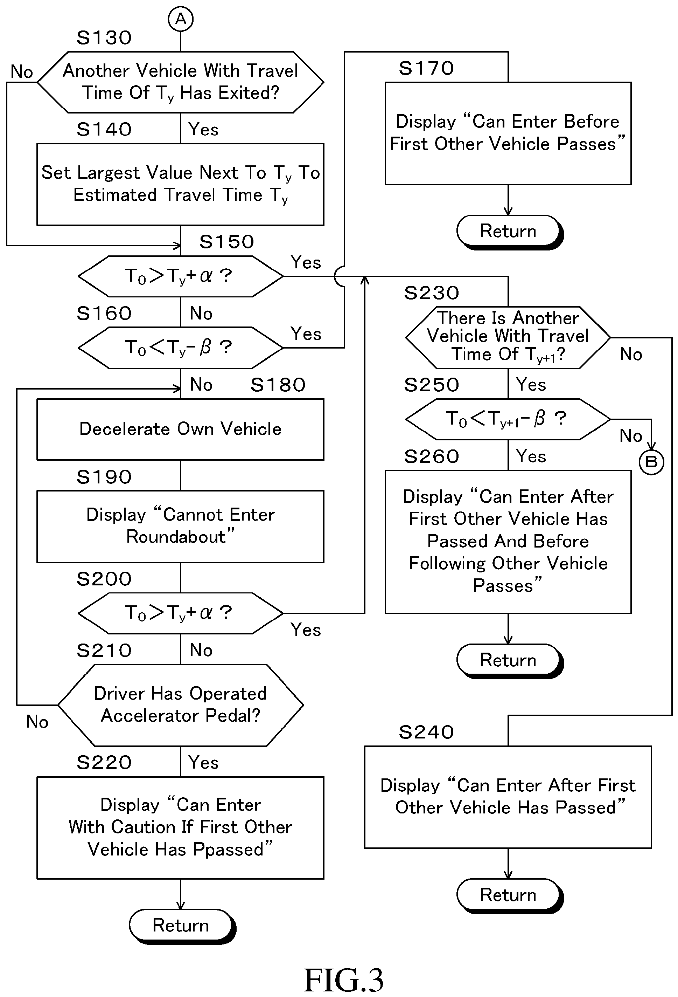

FIG. 3 is a flowchart corresponding to the second part of the driving assistance control program in the embodiment.
FIG. 4 is a flowchart corresponding to the last part of the driving assistance control program in the embodiment.
FIG. 5 is a diagram showing a situation in which an own vehicle is approaching a roundabout in a country where vehicles drive on the right side of a road.
FIG. 6 shows a situation where a second other vehicle is located in a shielded area, and a first other vehicle is located outside the shielded area in front of the second other vehicle.
FIG. 7 shows a situation where the first other vehicle is located in the shielded area, and the second other vehicle is located outside the shielded area behind the first other vehicle.
FIG. 8 shows a situation where there are no other vehicles in the roundabout except for the first other vehicle, and the first other vehicle reaches an entry position to the roundabout before the own vehicle.
FIG. 9 shows a situation where there are two other vehicles in the roundabout, a distance between the two other vehicles is large, and the first other vehicle reaches the entry position to the roundabout before the own vehicle.
FIG. 10 shows a situation where there are two other vehicles in the roundabout, and the distance between the two vehicles is small, and the first other vehicle reaches the entry position to the roundabout before the own vehicle.
FIG. 11 shows a situation where there are three other vehicles in the roundabout, and a distance between the first other vehicle and the second other vehicle is small, while a distance between the second other vehicle and the third other vehicle is large, and the first other vehicle reaches the entry position to the roundabout before the own vehicle.
FIG. 12 shows a situation where there are three other vehicles in the roundabout, distances between them are small, and the first other vehicle reaches the entry position to the roundabout before the own vehicle.
FIG. 13 shows a situation where there are two other vehicles in the roundabout, and the own vehicle reaches the entry position to the roundabout before the two other vehicles.
FIG. 14 shows a situation where there is one other vehicle in the roundabout and the own vehicle and the one other vehicle reach the entry position to the roundabout at almost the same time.
FIG. 15 shows a situation where there are two other vehicles in the roundabout, a distance between them is large, and the own vehicle reaches the entry position to the roundabout before the first other vehicle.
FIG. 16 shows a situation where there are two other vehicles in the roundabout, a distance between them is small, and the own vehicle reaches the entry position to the roundabout before the first other vehicle.

### DETAILED DESCRIPTION

The driving assistance device, method and program according to the embodiment of the present invention will be explained in detail below, with reference to the attached drawings.

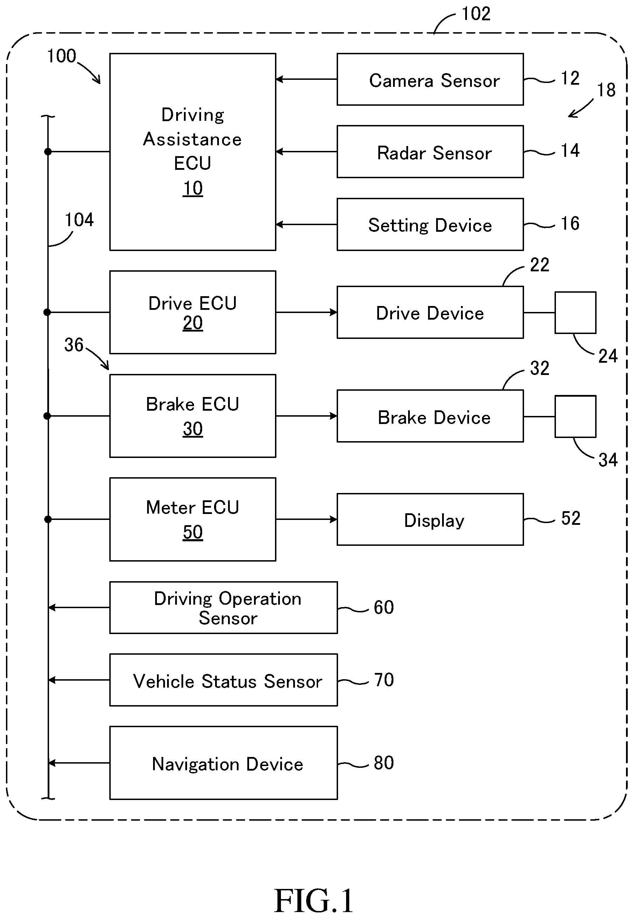

As shown in FIG. 1, the driving assistance device 100 of the present embodiment is applied to a vehicle 102 and includes a driving assistance ECU 10. The vehicle 102 is a vehicle capable of autonomous driving and is equipped with a drive ECU 20, a brake ECU 30, and a meter ECU 50. The ECU means an electronic control unit that has a microcomputer as a main part. The vehicle 102 is denoted as the "own vehicle 102" as necessary to distinguish it from other vehicles.

The microcomputer of each ECU includes a CPU, ROM, RAM, a read/write nonvolatile memory (N/M), and an interface (I/F), etc. The CPU realizes various functions by executing instructions (programs, routines) stored in the ROM. Furthermore, these ECUs are connected to each other in a way that allows them to exchange data (communicate) via a Controller Area Network (CAN) 104. Therefore, detected values of sensors (including switches) connected to a specific ECU are also sent to other ECUs.

The driving assistance ECU 10 is a central control unit that performs driving assistance controls, such as driving assistance control when entering a roundabout, following distance control, and lane maintenance control. In the embodiment, the driving assistance ECU 10 executes the driving assistance control when entering a roundabout, in cooperation with other ECUs, as will be explained in detail later. In particular, in the embodiment, the driving assistance ECU 10 determines whether or not the own vehicle can enter the roundabout, notifies a driver of a result of the determination , and assists driving of the driver by automatically braking the own vehicle as necessary.

The driving assistance ECU 10 is connected to a camera sensor 12, a radar sensor 14, and a setting device 16. The camera sensor 12 and the radar sensor 14 each include multiple camera devices and multiple radar devices. The camera sensor 12 and the radar sensor 14 function as an object information acquisition device 18 that acquires information on objecs around the vehicle 102.

Each camera device of the camera sensor 12, which is not shown in FIG. 1, is equipped with a camera section that takes pictures of surroundings of the own vehicle 102 and a recognition section that recognizes road markings, other vehicles, and other objects by analyzing image data obtained by the camera section. The recognition section supplies information about recognized objects to the driving assistance ECU 10 at predetermined intervals.

Each radar device of the radar sensor 14 uses millimeter wave band radio waves to detect a distance between the own vehicle and a solid object, a relative speed between the own vehicle and the solid object, and a relative position (direction) of the solid object with respect to the own vehicle, and supplies information representing these to the driving assistance ECU 10 at predetermined intervals. In addition, LiDAR (Light Detection And Ranging) may be used in place of or in addition to the radar sensor 14.

The setting device 16 is provided in a position that can be operated by the driver, such as a steering wheel that is not shown in FIG. 1, and is operated by the driver. Although not shown in FIG. 1, the setting device 16 includes a driving assistance switch. As will be explained in detail later, the driving assistance ECU 10 executes the driving assistance control when entering a roundabout while the driving assistance switch is turned on.

The drive ECU 20 is connected to a drive device 22 that accelerates the own vehicle 102 by applying driving force to drive wheels 24. The drive ECU 20 controls the drive device 22 so that the driving force generated by the drive device 22 changes in accordance with driving operation by the driver in normal operation, and when it receives a command signal from the driving assistance ECU 10, it controls the drive device 22 based on the command signal.

The brake ECU 30 is connected to a brake device 32 that decelerates the vehicle 102 by applying braking force to wheels 34. In normal operations, the brake ECU 30 controls the brake device 32 so that the braking force generated by the brake device 32 changes in accordance with braking operation by the driver, and when it receives a command signal from the driving assistance ECU 10, it performs automatic braking by controlling the brake device 32 based on the command signal.

Therefore, the brake ECU 30 and the brake device 32 cooperate to function as an automatic brake device 36. In addition, when braking force is applied to the wheels by driving control, etc., brake lights, which are not shown in FIG. 1, are turned on.

The meter ECU 50 is connected to a touch panel display 52 that displays status of the control executed by the driving assistance ECU 10. The display 52 may be a multi-information display that displays various types of information, such as meters, or it may be the display of a navigation device 80 described later. As described later, the display 52 displays the status of the driving control when it receives a signal from the driving assistance ECU 10.

Driving operation sensors 60 and vehicle status sensors 70 are also connected to the CAN 104. Information detected by the driving operation sensors 60 and the vehicle status sensors 70 (referred to as sensor information) is transmitted to the CAN 104. The sensor information transmitted to the CAN 104 can be used as appropriate in each ECU. The sensor information may be information from a sensor connected to a specific ECU, and may be transmitted from that specific ECU to the CAN 104.

The driving operation sensors 60 includes a driving operation amount sensor that detects an amount of operation on an accelerator pedal, a braking operation amount sensor that detects a master cylinder pressure or a force applied to a brake pedal, and a brake switch that detects whether or not the brake pedal is being operated. The driving operation sensors 60 also includes a steering angle sensor that detects a steering angle and a steering torque sensor that detects a steering torque.

The vehicle status sensors 70 includes a vehicle speed sensor that detects s vehicle speed Vo of the own vehicle 102, a longitudinal acceleration sensor that detects a longitudinal acceleration of the own vehicle, a lateral acceleration sensor that detects a lateral acceleration of the own vehicle, and a yaw rate sensor that detects a yaw rate of the own vehicle.

Furthermore, the navigation device 80 is also connected to the CAN 104. The navigation device 80 is equipped with a GPS receiver that detects a position of the own vehicle 102, a memory device that stores map information and road information, and a communication device that acquires the latest information on map information and road information from an external source. In particular, the road information may include information on locations of roundabouts, a center radius of a ring road of each roundabout, and whether or not there is any obstacle in a central island of each roundabout that would interfere with the acquisition of object information by the object information acquisition device 18. Furthermore, the road information may not include information on whether or not there is any obstacle in the central island of each roundabout, and the determination of whether or not there is any obstacle in the central island of each roundabout may be made based on information acquired by the object information acquisition device 18. Furthermore, information on the roundabout may be acquired by means of external communication, etc.

In the embodiment, the ROM of the driving assistance ECU 10 stores a driving assistance control program for entering a roundabout corresponding to the flowcharts shown in FIG.S 2 to 4. The driving assistance method for entering a roundabout in the embodiment is performed by executing the driving assistance control for entering a roundabout according to the flowcharts shown in FIG.S 2 to 4.

### <Driving assistance control (FIG.S 2 to 4)>

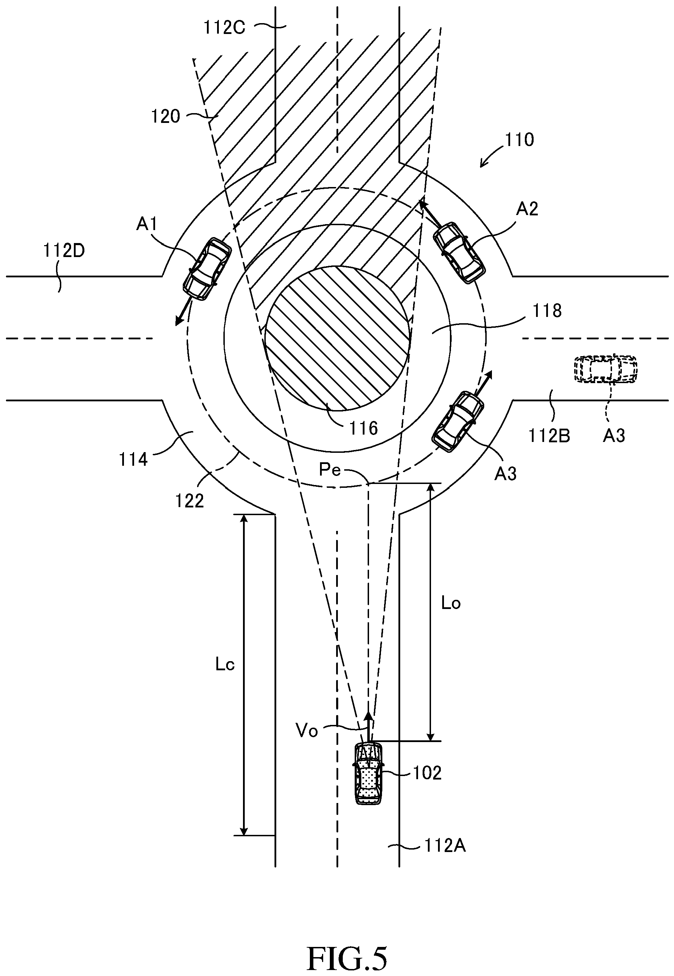

Next, will be explained the driving assistance control when entering a roundabout in the embodiment, referring to the flowcharts shown in FIG.S 2 to 4 and FIG. 5 which shows a situation where an own vehicle approaches a roundabout in a country where vehicles drive on the right side of a road. The driving assistance control according to the flowcharts shown in FIG.S 2 to 4 is repeatedly executed at predetermined intervals by the CPU of the driving assistance ECU 10 in a situation where the driving assistance switch is turned on.

In FIG. 5, 110 indicates a single-lane roundabout where four roads 112A-112D intersect in a cross shape, and 114 indicates a ring road of the roundabout 110. The number of roads that intersect at the roundabout may be other than four. 116 indicates an obstacle that prevents the own vehicle 102 from detecting other vehicles traveling in the roundabout, such as a monument or fountain located in an island 118 of the roundabout 110. 120 indicates a shielded area (the area with hatching in FIG. 5) that is shielded by the obstacle 116 and cannot be seen from the own vehicle 102. The shielded area 120 changes depending on a position of the own vehicle 102 relative to the roundabout 110 and the obstacle 116.

In FIG. 5, three other vehicles A1 to A3 traveling on the ring road 114 are illustrated. It is assumed that the other vehicles A1 to A3 travel along an arc 122 that indicates a center of the ring road 114, and the radius R (not shown) of the arc 122 can be estimated from the information from the navigation device 80.

First, in step S10, the CPU determines whether or not there is a single-lane roundabout 110 within a reference distance Lc ahead of the own vehicle 102 based on information from the navigation device 80. When a negative determination is made, step S10 is executed again, and when an affirmative determination is made, the control proceeds to step S20.

The reference distance Lc may be a positive constant, but it may be set to a value variable according to a vehicle speed Vo of the own vehicle 102, so that the higher the vehicle speed of the own vehicle, the larger the reference distance Lc becomes. In addition, even if there is a roundabout in front of the own vehicle 102 within the reference distance Lc, a negative determination is made if the roundabout has multiple lanes.

In step S20, the CPU determines whether or not there is a preceding vehicle between the own vehicle 102 and the roundabout 110. When an affirmative determination is made, the control returns to step S10, and when a negative determination is made, the control proceeds to step S30.

In step S30, the CPU determines whether or not there is any other vehicle traveling in the roundabout 110 based on the information on the objects acquired by the object information acquisition device 18. When an affirmative determination is made, the control proceeds to step S50, and when a negative determination is made, the control proceeds to step S40.

In step S40, the CPU outputs a command signal to the meter ECU 50 to display "Can Enter" on the display 52, indicating that the own vehicle 102 may enter the roundabout 110.

In step S50, the CPU determines whether or not there is an obstacle 116 in the island 118 of the roundabout 110 that prevents the object information acquisition device 18 from acquiring information about other vehicles traveling in the roundabout 110. When a negative determination is made, the control proceeds to step S70, and when an affirmative determination is made, the control proceeds to step S60.

In step S60, the CPU determines whether or not there is any other vehicle that has become unable to acquire information using the object information acquisition device 18 due to being shielded by the obstacle 116. The determination of whether or not there is any other vehicle that has become unable to acquire information may be made, for example, by determining whether it has become impossible to acquire information on another vehicle that was traveling before the shielded area 120 acquired by the object information acquisition device 18. When an affirmative determination is made, the control proceeds to step S90, and when a negative determination is made, the control proceeds to step S70. Note that when a part of the other vehicle enters the shielded area 120, the other vehicle may be determined to be shielded.

In step S70, the CPU estimates a distance Lo from the present position of the own vehicle 102 to an entry position Pe to the roundabout 110 based on information from the navigation device 80 and/or information on the objects acquired by the object information acquisition device 18. In addition, the CPU estimates a first travel time Tₒ required for the own vehicle to reach the entry position Pe to the roundabout from the present position based on a vehicle speed Vo detected by the vehicle speed sensor and the distance Lo of the own vehicle 102. In estimating the first travel time Tₒ, a longitudinal acceleration Go of the own vehicle 102 detected by the longitudinal acceleration sensor may be taken into account.

In step S70, the CPU further estimates a radius R of the arc 122 of the ring road 114 of the roundabout 110 based on information from the navigation device 80. In addition, based on the information on the objects acquired by the object information acquisition device 18, the CPU estimates, for x number vehicles (x = 1, 2, ... n, where n is a positive integer) traveling in the roundabout 110, distances Lₓ (not shown) from present positions of the other vehicles to the entry position Pe to the roundabout based on the positions of the other vehicles and the radius R. Furthermore, the CPU estimates speeds Vₓ of the other vehicles based on the information on the other vehicles acquired by the object information acquisition device 18, and estimates travel times Tₓ required for the other vehicles to reach the entry position Pe to the roundabout from their present positions based on the distances Lₓ and the speeds Vₓ of the other vehicles.

In order to identify the other vehicles, x is determined in ascending order of the distances Lₓ from the other vehicles to the entry position Pe, and corresponds to the order in which the other vehicle are estimated to arrive the entry position Pe. Therefore, x is 1 for the other vehicle with the smallest distance Lₓ to the entry position Pe in front of it, and x is n for the other vehicle with the largest distance Lₓ to the entry position Pe in front of it. Therefore, the smaller x is, the smaller Tₓ is. In addition, based on the information on the objects acquired by the object information acquisition device 18, longitudinal accelerations Gₓ of the other vehicles may be estimated, and the longitudinal accelerations Gₓ of the other vehicles may be taken into account when estimating the travel times Tₓ.

In step S80, the CPU sets a travel time T_{y} for determining whether or not it is possible for the own vehicle 102 to enter the roundabout 110 to the second travel time T₁, that is, the travel time of the other vehicle that is likely to reach the entry position Pe to the roundabout first.

In step S90, the CPU estimates, based on the information about the other vehicle acquired by the object information acquisition device 18 before it was blocked by the obstacle 116, a speed Vₘ of the other vehicle and a distance Lₘ from a present position of the other vehicle to the entry position Pe to the roundabout. Furthermore, the CPU estimates the travel time Tₘ required for the other vehicle to reach the entry position Pe from the present position of the other vehicle based on the distance Lₘ and the speed Vₘ of the other vehicle. In addition, based on the information on the objects acquired by the object information acquisition device 18, a longitudinal acceleration Gₘ of the other vehicle may be estimated, and the longitudinal acceleration Gₘ of the other vehicle may be taken into account when estimating the travel time Tₘ.

In step S100, the CPU estimates the first travel time Tₒ requried for the own vehicle to reach the entry position Pe to the roundabout from the present position in the same way as in step S70. The CPU also estimates the travel time Tₓ requried for the x number other vehicles traveling in the roundabout 110 to reach the entry position Pe to the roundabout from the present position. In this step too, the smaller the value of x, the smaller the value of Tₓ.

In step S110, the CPU sets a travel time T_{y} for determining whether or not the own vehicle 102 can enter the roundabout 110 to smaller one of the second travel time T₁ of the other vehicle that has the greatest possibility of reaching the entry position Pe to the roundabout first and the estimated travel time Tₘ.

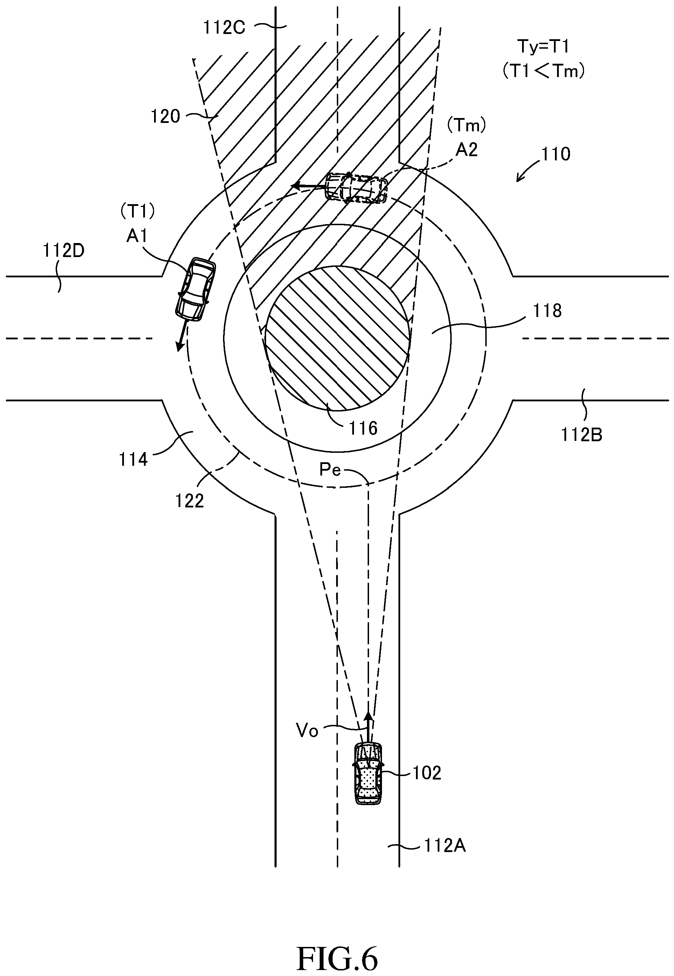

For example, FIG. 6 shows a situation where another vehicle A2 is located within the shielded area 120, another vehicle A1 is located outside the shielded area 120 and in front of the other vehicle A2, and there are no other vehicles between the other vehicle A1 and the entry position Pe to the roundabout. In the situation shown in FIG. 6, since the second travel time T₁ is smaller than the estimated travel time Tₘ, the second travel time T₁ is set to the travel time T_{y}.

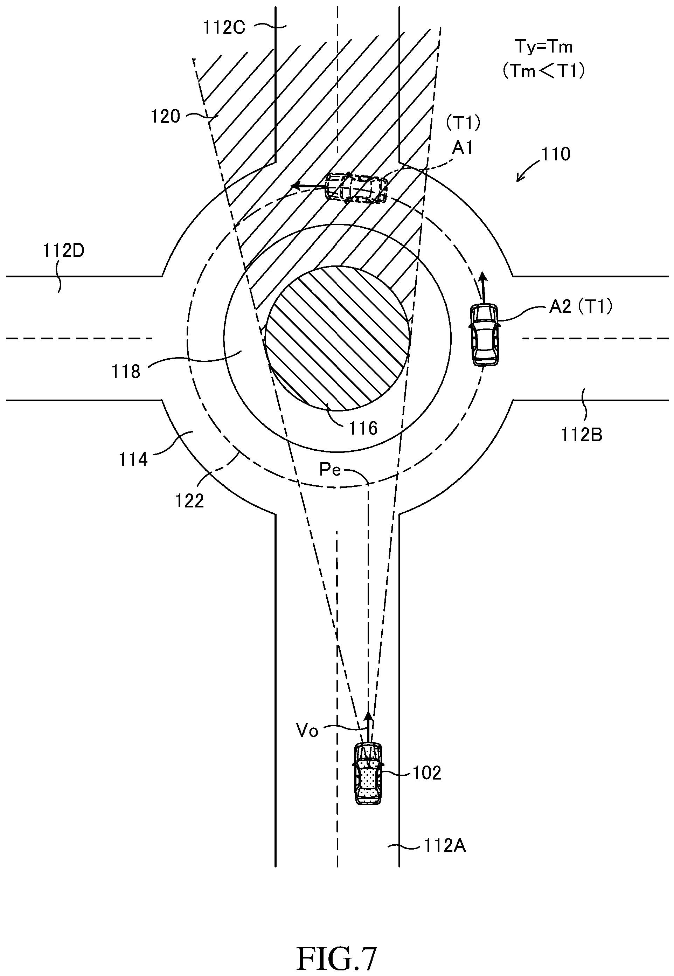

In contrast, FIG. 7 shows a situation where another vehicle A1 is located within the shielded area 120, another vehicle A2 is located outside the shielded area 120 and behind the other vehicle A1, and there are no other vehicles between the other vehicle A1 and the entry position Pe to the roundabout. In the situation shown in FIG. 7, the estimated travel time Tₘ is smaller than the second travel time T₁, so the estimated travel time Tₘ is set to the travel time T_{y}.

In step S120, the CPU determines whether or not the first travel time Tₒ requried for the own vehicle to reach the entry position Pe to the roundabout is less than or equal to a reference value T_{oc}. When a negative determination is made, the control returns to step S10, and when an affirmative determination is made, the control proceeds to step S130. The reference value T_{oc} may be a positive constant, but it may also be set to a value variable according to the vehicle speed Vo of the own vehicle 102, so that the higher the vehicle speed Vo of the own vehicle 102, the larger the reference value T_{oc} becomes.

In step S130, the CPU determines whether or not another vehicle with a travel time of T_{y} has exited the roundabout 110, based on the information on the object acquired by the object information acquisition device 18. When a negative determination is made, the control proceeds to step S150, and when an affirmative determination is made, the control proceeds to step S140.

With regard to the other vehicle located outside the shielded area 120, when it is determined that the other vehicle has moved from the ring road 114 to a road connecting to it, as shown by the dashed line for other vehicle A3 in FIG. 5, it may be determined that the other vehicle has exited the roundabout 110. In addition, for the other vehicle located within the shielded area 120, when the other vehicle, whose travel time is Tₘ, does not appear at a position beyond the shielded area 120 by the time it should do so, it may be determined that the other vehicle has exited the roundabout 110.

In step S140, the CPU sets the largest value next to T_{y} to the estimated travel time T_{y}. The largest value next to T_{y} is T₂ when T_{y} was set to T₁ in step S80 and the smaller of T₂ and the estimated travel time Tₘ when T_{y} was set to T₁ in step S110. In addition, the largest value next to T_{y} is the smaller of T₁ and the estimated travel time Tₘ₊₁ of another vehicle (if any) located in the shielded area 120 behind the other vehicle whose travel time is Tₘ.

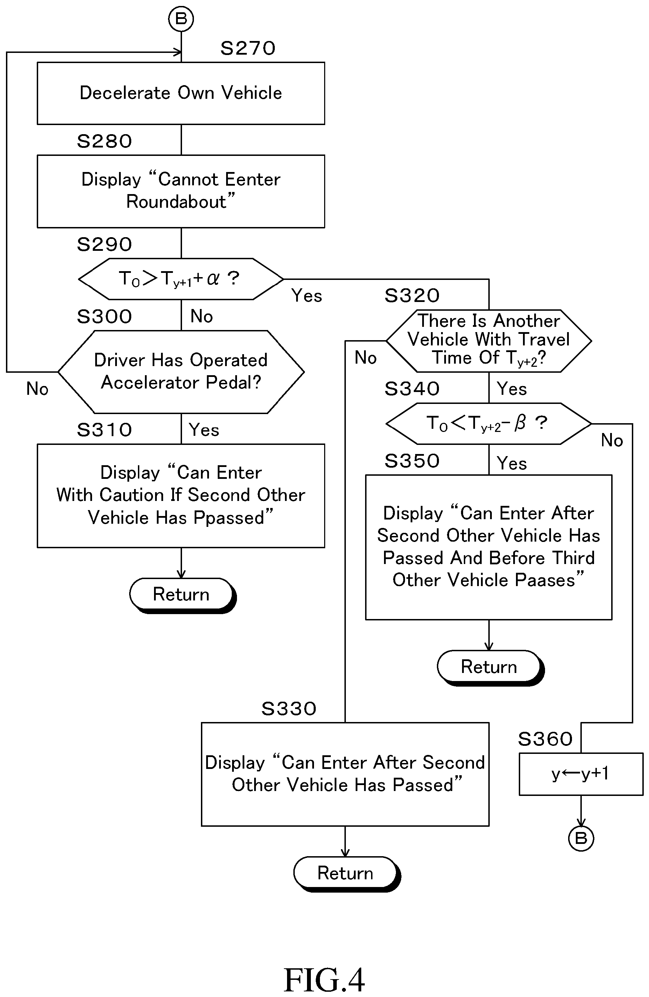

In addition, although it is not shown in FIG. 4, wen there is no largest value next to T_{y}, that is, when it is determined that there is only one other vehicle traveling in the roundabout 110 and that one other vehicle has exited the roundabout, the control proceeds to step S40.

In step S150, the CPU determines whether or not the first travel time Tₒ of the own vehicle 102 is greater than T_{y}+α, that is, whether or not the own vehicle can enter the roundabout after the other vehicle with the travel time of T_{y} has passed the entry position Pe. Notably, α is a first margin time that may be a positive constant. When an affirmative determination is made, the control proceeds to step S230, and when a negative determination is made, the control proceeds to step S160.

In step S160, the CPU determines whether or not the first travel time Tₒ of the own vehicle 102 is less than T_{y}-β, that is, whether or not the own vehicle can enter the roundabout before the other vehicle with the travel time of T_{y} passes the entry position Pe. Notably, β is a second safety margin that may be a positive constant. When a negative determination is made, the control proceeds to step S180, and when an affirmative determination is made, the control proceeds to step S170.

In step S170, the CPU determines that the own vehicle 102 may enter the roundabout 110 before the first other vehicle passes the entry position Pe to the roundabout. Furthermore, the CPU outputs a command signal to the meter ECU 50 to display "Can enter before (first) other vehicle passes" on the display 52.

In step S180, the CPU outputs a command signal to the automatic brake device 36 via the brake ECU 30 to decelerate the own vehicle 102 at a predetermined deceleration rate by the automatic braking. The predetermined deceleration rate may be a constant value that has been set in advance, but it may also be set in a variable manner in accordance with the estimated travel time Tₒ, so that the deceleration rate is larger the smaller the estimated travel time Tₒ is.

In step S190, the CPU determines that the own vehicle 102 cannot enter the roundabout 110. Furthermore, the CPU outputs a command signal to the meter ECU 50 to display "Cannot enter roundabout" on the display 52. In addition, "Automatic deceleration in progress" indicating that the own vehicle 102 is being decelerated by the automatic braking may also be displayed on the display 52.

In step S200, the CPU estimates the first travel time Tₒ requried for the own vehicle to reach the entry position Pe to the roundabout 110, in the same way as in step S70. In addition, the CPU estimates, for the first other vehicle that has the shortest estimated travel distance to the entry position Pe to the roundabout among the other vehicles traveling in the roundabout, a travel time T_{y} required for the first other vehicle to reach the entry position Pe to the roundabout from its present position.

In addition, in step S200, the CPU determines whether or not the first travel time Tₒ of the own vehicle 102 is greater than T_{y}+α, that is, whether or not the own vehicle can enter the roundabout after the other vehicle with the travel time of T_{y} has passed the entry position Pe. When an affirmative determination is made, the deceleration of the own vehicle 102 is completed, and the control proceeds to step S230. When a negative determination is made, the control proceeds to step S210.

In step S210, the CPU determines whether or not the driver has operated the accelerator pedal based on an amount of accelerator pedal operation detected by the driving operation amount sensor of the driving operation sensor. When a negative determination is made, the control returns to step S180. When an affirmative determination is made, the deceleration of the own vehicle 102 is completed, and the control proceeds to step S220.

In step S220, the CPU determines that the own vehicle 102 may enter the roundabout 110 if the first other vehicle has passed the entry position Pe to the roundabout. Furthermore, the CPU outputs a command signal to the meter ECU 50 to display "Can enter with caution if the first other vehicle has passed" on the display 52.

In step S230, the CPU determines whether or not there is another vehicle with a travel time of T_{y+1}, that is, whether or not there is another vehicle (the second other vehicle) with a travel time Larger than T_{y}. When an affirmative determination is made, the control proceeds to step S250, and when a negative determination is made, the control proceeds to step S240.

In step S240, the CPU determines that the own vehicle 102 may enter the roundabout 110 after the first other vehicle has passed the entry position Pe to the roundabout. Furthermore, the CPU outputs a command signal to the meter ECU 50 to display "Can enter after first other vehicle has passed" on the display 52.

In step S250, the CPU determines whether or not the first travel time Tₒ of the own vehicle 102 is less than T_{y+1}-β, that is, whether or not the own vehicle can enter the roundabout before the other vehicle with a travel time of T_{y+1} passes the entry position Pe. When a negative determination is made, the control proceeds to step S270, and when an affirmative determination is made, the control proceeds to step S260.

In step S260, the CPU determines that the own vehicle 102 may enter the roundabout 110 after the first other vehicle A1 has passed the entry position Pe to the roundabout, but before the following other vehicle A2 passes the entry position Pe. Furthermore, the CPU outputs a command signal to the meter ECU 50 to display "Can enter after first other vehicle has passed and before following other vehicle paases" on the display 52.

In step S270, the CPU outputs a command signal to the automatic brake device 36 via the brake ECU 30 to decelerate the own vehicle 102 at the predetermined deceleration rate by the automatic braking, in the same way as in step S180.

In step S280, the CPU determines that the own vehicle 102 cannot enter the roundabout 110. Furthermore, the CPU outputs a command signal to the meter ECU 50 to display "Cannot enter roundabout" on the display 52. In addition, "Automatic deceleration in progress" indicating that the own vehicle 102 is being decelerated by the automatic braking may also be displayed on the display 52.

In step S290, the CPU estimates the first travel time Tₒ requried for the own vehicle to reach the entry position Pe to the roundabout from the present position, in the same way as in step S70. The CPU also estimates a third travel time T_{y+1} requried for the second vehicle following the first vehicle among other vehicles traveling in the roundabout 110 to reach the entry position Pe to the roundabout from the present position.

In addition, in step S290, the CPU determines whether or not the first travel time Tₒ of the own vehicle 102 is greater than T_{y+1}+α, that is, whether or not the own vehicle can enter the roundabout after the second other vehicle with the travel time of T_{y+1} has passed the entry position Pe. When an affirmative determination is made, the control proceeds to step S320, and when a negative determination is made, the control proceeds to step S300.

In step S300, the CPU determines whether or not the driver has operated the accelerator pedal, based on the amount of accelerator pedal operation detected by the driving operation amount sensor of the driving operation sensors, in the same way as in step S210. When a negative determination is made, the driving assistance control returns to step S270, and when an affirmative determination is made, the control proceeds to step S310.

In step S310, the CPU determines that if the second other vehicle A2 has passed the entry position Pe to the roundabout, the own vehicle 102 may enter the roundabout 110. Furthermore, the CPU outputs a command signal to the meter ECU 50 to display "Enter with caution if second other vehicle has passed" on the display 52.

In step 320, the CPU determines whether or not there is another vehicle with a travel time of T_{y+2}, that is, whether or not there is another vehicle (the third vehicle) with a travel time larger than T_{y+1}. When an affirmative determination is made, the control proceeds to step S340, and when a negative determination is made, the control proceeds to step S330.

In step S330, the CPU determines that the own vehicle 102 may enter the roundabout 110 after the first other vehicle A1 and the second vehicle A2 have passed the entry position Pe to the roundabout. Furthermore, the CPU outputs a command signal to the meter ECU 50 to display "Can enter after second vehicle has passed" on the display 52.

In step S340, the CPU determines whether or not the first travel time Tₒ of the own vehicle 102 is less than T_{y+2}-β, that is, whether or not the own vehicle can enter the roundabout before the other vehicle with a travel time of T_{y+2} passes the entry position Pe. When a negative determination is made, the control proceeds to step S360, and when an affirmative determination is made, the control proceeds to step S350.

In step S350, the CPU determines that the own vehicle 102 may enter the roundabout 110 after the second other vehicle has passed the entry position Pe to the roundabout and before the third vehicle has passed the entry position Pe. Furthermore, the CPU outputs a command signal to the meter ECU 50 to display "Can enter after second other vehicle has passed and before third other vehicle passes" on the display 52.

In step S360, the CPU increments y to y+1. When step S360 is completed, the driving assistance control returns to step S270.

It is to be noted that when y is incremented to y+1 in step S360 and step S270 and subsequent steps are executed, the ordinal numbers of the other vehicles displayed on the display 52 in steps S310, S330 and S350 are increased by 1 for each increment of y.

For example, when y is incremented once, "Can enter with caution if third other vehicle has passed" is displayed in step S310, and "Can enter after third other vehicle has passed" is displayed in step S330. Furthermore, in step S350, "Can enter after third other vehicle has passed and before fourth other vehicle passes" is displayed.

### <Operation of the embodiment>

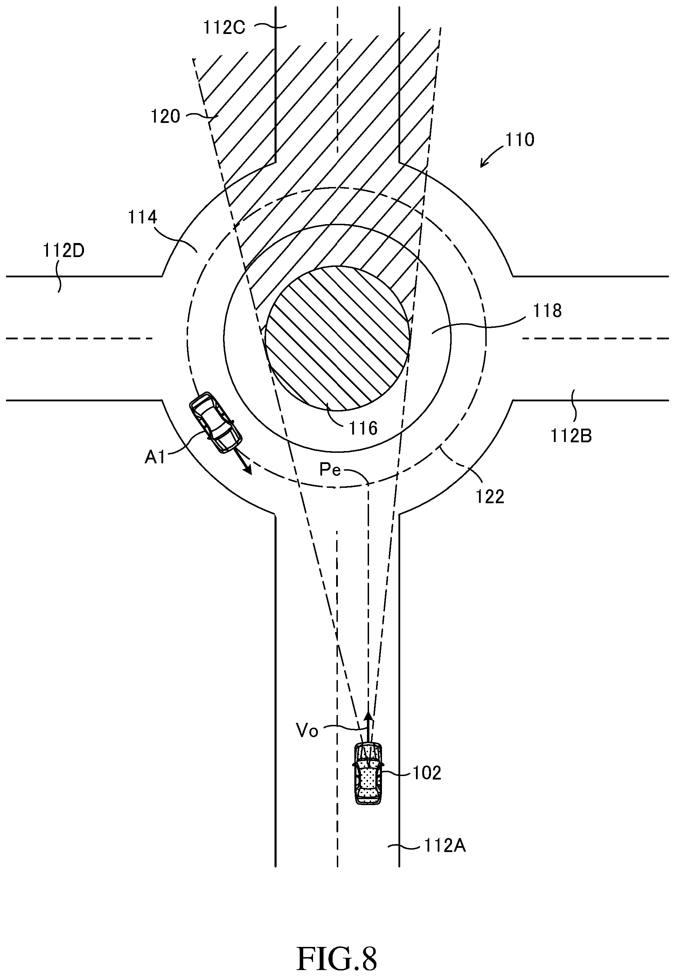

The operation of the embodiment will be explained with respect to various cases where the own vehicle 102 approaches the roundabout 110 and the number and position of other vehicles traveling in the roundabout differ.
C1: When the first other vehicle reaches the entry position to the roundabout before the own vehicle (FIG.S 8 to 12)
C1-1: When there is only one other vehicle in the roundabout (FIG. 8)

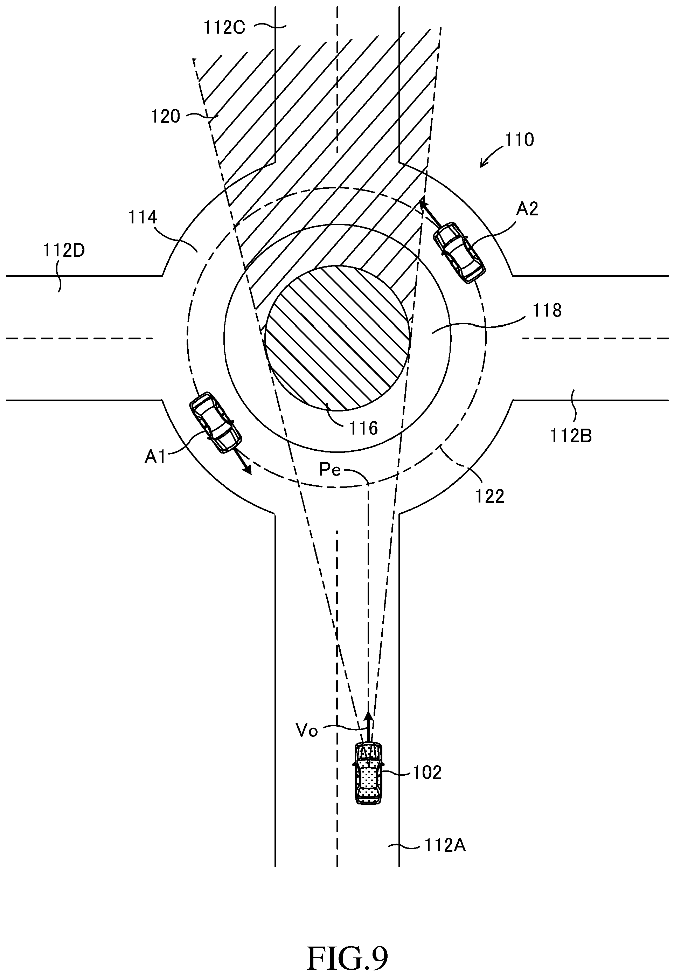

FIG. 8 shows a situation where there are no other vehicles in the roundabout 110 except for the vehicle A1. In this situation, an affirmative determination is made in step S150, and a negative determination is made in step S230. Therefore, in step S240, "Can enter after (first) other vehicle has passed" is displayed on the display 52 to indicate that the own vehicle 102 may enter the roundabout 110 after the other vehicle A1 has passed the entry position Pe to the roundabout.
C1-2: When there are two other vehicles in the roundabout and a distance between them is large (FIG. 9)

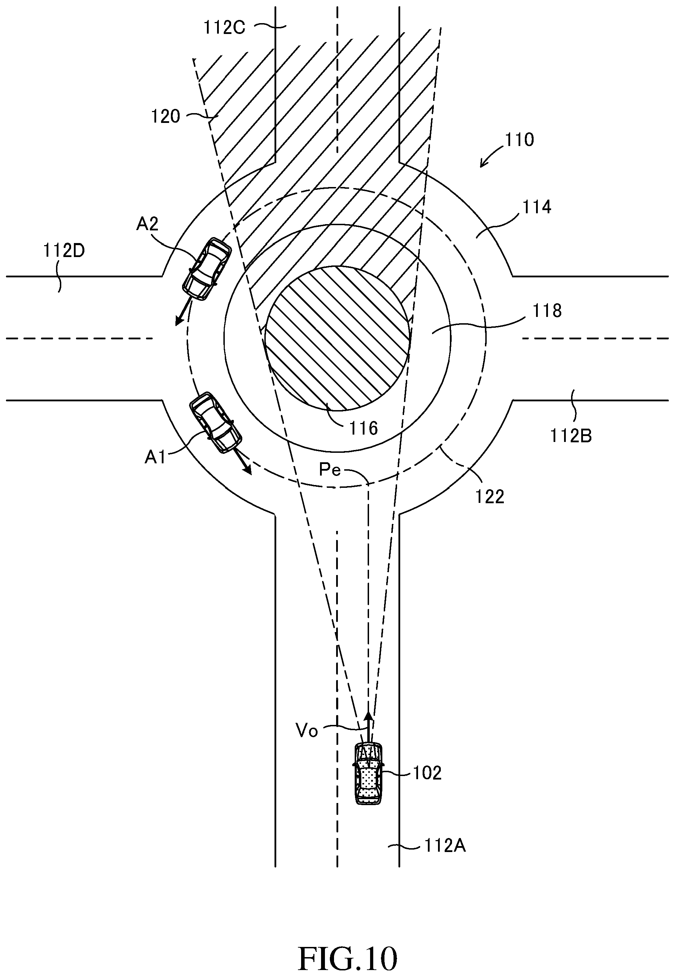

FIG. 9 shows a situation where there are two other vehicles A1 and A2 in the roundabout 110, and a distance between the other vehicles A1 and A2 is large, and the other vehicle A1 reaches the entry position Pe to the roundabout before the own vehicle 102. In this situation, affirmative determinations are made in steps S150, S230, and S250. Therefore, in step S260, "Can enter after first other vehicle has passed and before following other vehicle passes" is displayed on the display 52, indicating that the own vehicle 102 may enter the roundabout 110 after the other vehicle A1 has passed the entry position Pe to the roundabout and before the other vehicle A2 passes the entry position Pe.
C1-3: When there are two other vehicles in the roundabout and a distance between them is small (FIG. 10)

FIG. 10 shows a situation where there are two other vehicles A1 and A2 in the roundabout 110, and a distance between the other vehicles A1 and A2 is small. In this situation, affirmative determinations are made in steps S150 and S230, and a negative determination is made in step S250. Therefore, in step S270, the own vehicle 102 is decelerated by the automatic braking.

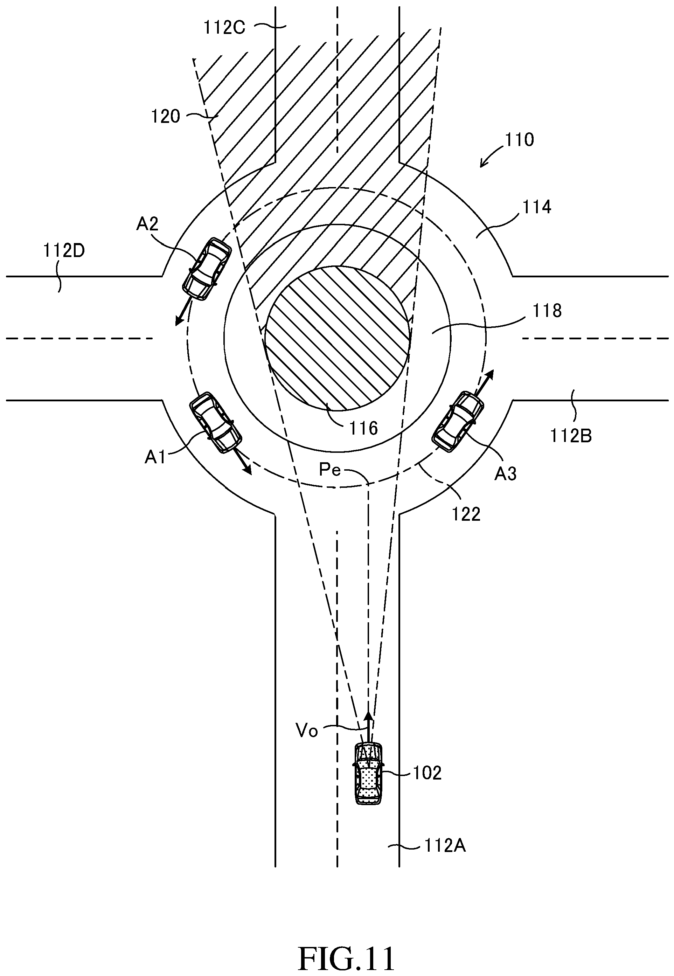

Furthermore, when the first travel time Tₒ becomes larger than T_{y+1}+α, an affirmative determination is made in step S290, and a negative determination is made in step S320. Therefore, in step S330, "Can enter roundabout after second other vehicle has passed" is displayed on the display 52 to indicate that the own vehicle 102 may enter the roundabout 110 after the second other vehicle A2 has passed the entry position Pe to the roundabout.
C1-4: There are three other vehicles in the roundabout, and a distance between the first and second other vehicles is small, while a distance between the second and third other vehicles is large (FIG. 11)

FIG. 11 shows a situation where there are three other vehicles A1 to A3 in the roundabout 110, and a distance between the other vehicles A1 and A2 is small, while a distance between the other vehicles A2 and A3 is large. In this situation, affirmative determinations are made in steps S150 and S230, a negative determination is made in step S250, and the own vehicle 102 is decelerated in step S270. When the first travel time Tₒ becomes greater than T_{y+1}+α, affirmative determinations are made in steps S290 and S320.

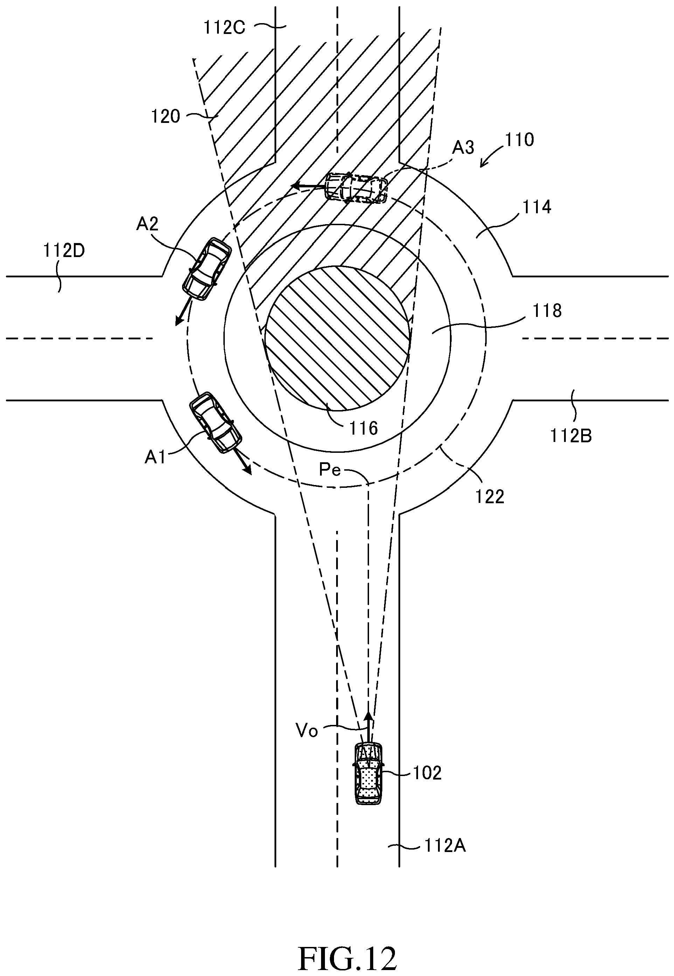

Because the distance between the other vehicles A2 and A3 is large, an affirmative determination is made in step S340. Therefore, in step S350, "Can enter after second other vehicle has passed and before third other vehicle passes" is displayed on the display 52.
C1-5: When there are three other vehicles in the roundabout and distances between them are small (FIG. 12)

FIG. 12 shows a situation where there are three other vehicles A1 to A3 in the roundabout 110 and distances between them are small. In this situation, as in the case C1-4, affirmative determinations are made in steps S150 and S230, a negative determination is made in step S250, and the own vehicle 102 is decelerated in step S270. When the first travel time Tₒ becomes greater than T_{y+1}+α, affirmative determinations are made in steps S290 and S320, and a negative determination is made in step S340.

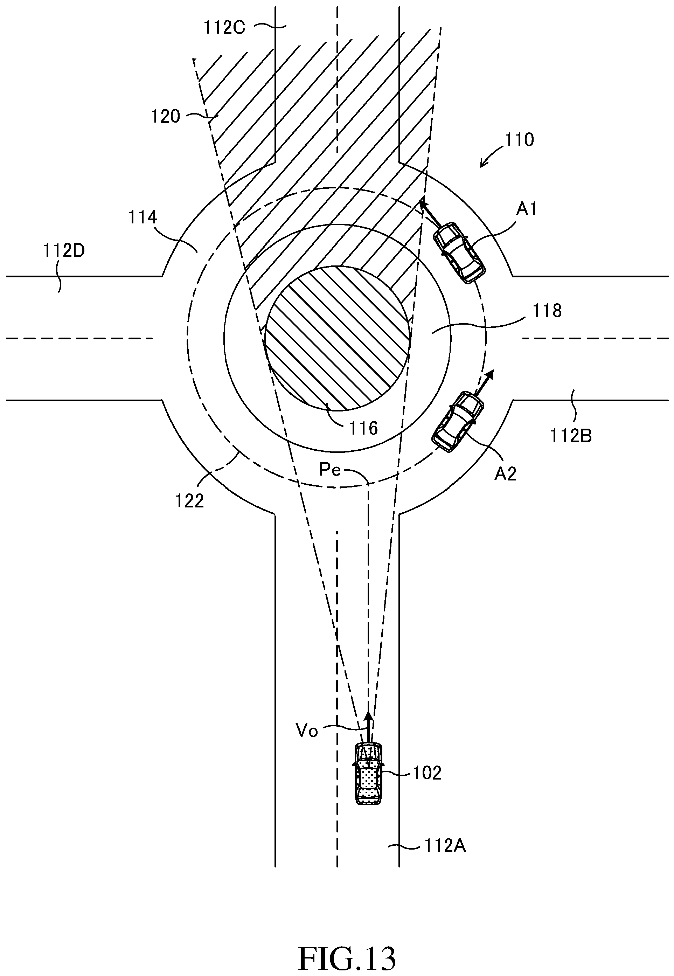

In step S360, y is incremented by 1, and in step S270, the own vehicle 102 is decelerated by the automatic braking. When the first travel time Tₒ becomes greater than T_{y+1}+α, an affirmative determination is made in step S290, and a negative determination is made in step S320. Therefore, in step S330, "Can enter after third other vehicle has passed" is displayed on the display 52.
C2: When the own vehicle reaches the entry position to the roundabout before the first vehicle (FIG. 13)

FIG. 13 shows a situation where there are two other vehicles A1 and A2 in the roundabout 110, and the own vehicle 102 reaches the entry position Pe to the roundabout before the other vehicles A1 and A2. Note that there may be more than two other vehicles in the roundabout 110.

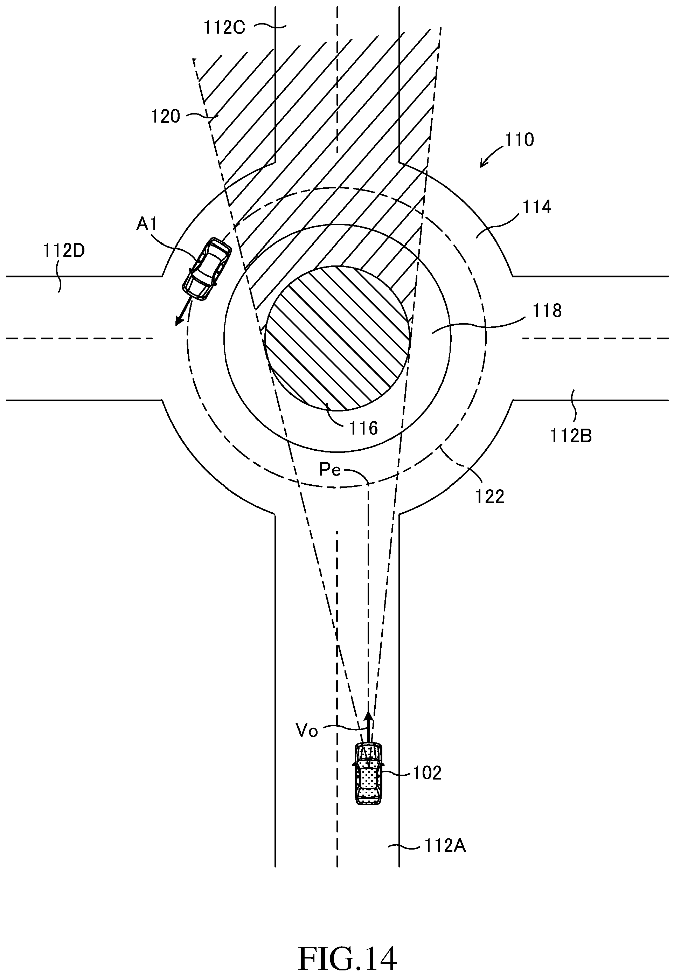

In this situation, a negative determination is made in step S150, an affirmative determination is made in step S160, and "Can enter before first other vehicle passes" is displayed on the display 52 in step S170.
C3: When the own vehicle and one other vehicle reach the entry position to the roundabout at almost the same time (FIG.S. 14 to 16)
C3-1: When there is only one other vehicle in the roundabout (FIG. 14)

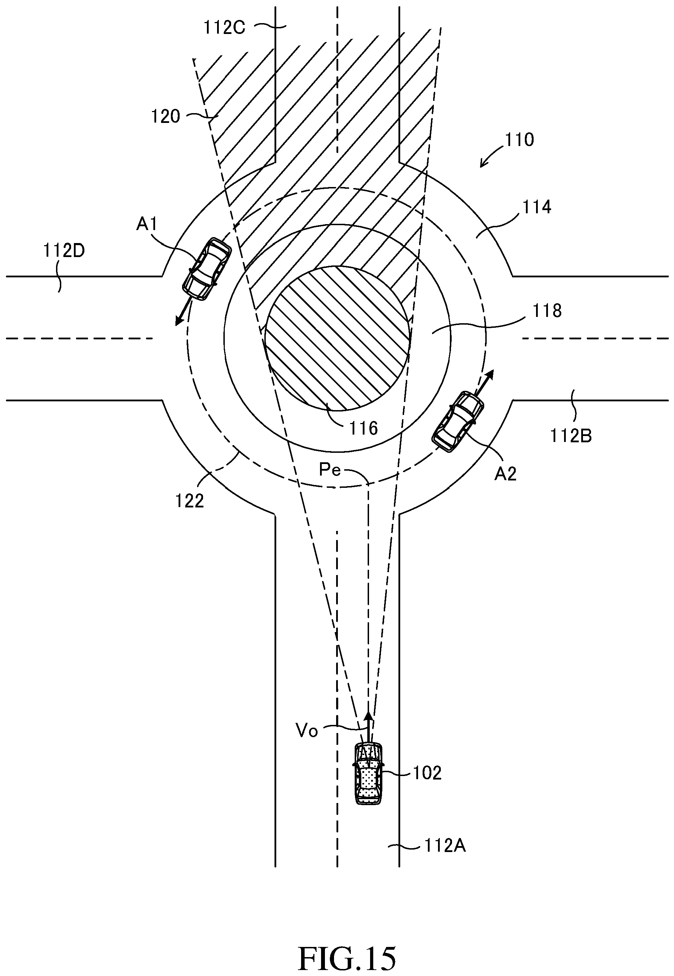

FIG. 14 shows a situation where there is one other vehicle A1 in the roundabout 110, and the own vehicle 102 and the other vehicle reach the entry position Pe to the roundabout at almost the same time. In this situation, negative determinations are made in steps S150 and S160, and the own vehicle 102 is decelerated in step S180. When the first travel time Tₒ becomes greater than T_{y}+α, an affirmative determination is made in step S200, and a negative determination is made in step S230. Therefore, "Can enter after first other vehicle has passed" is displayed on the display 52 in step S240.
C3-2: When there are two other vehicles in the roundabout and a distance between them is large (FIG. 15)

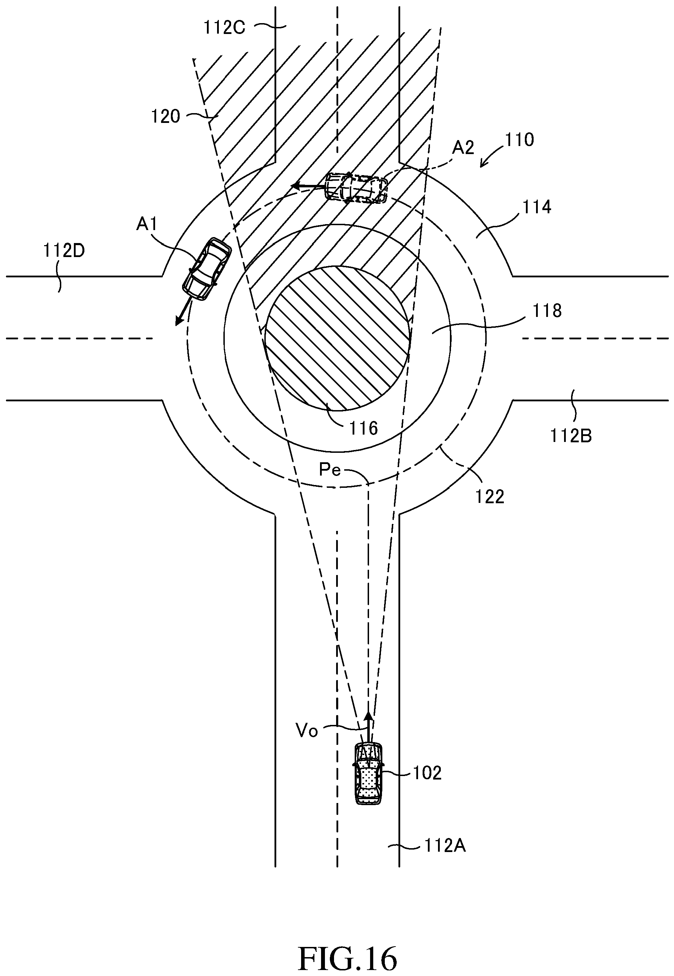

FIG. 15 shows a situation where there are two other vehicles A1 and A2 in the roundabout 110, and a distance between the other vehicles A1 and A2 is large, and the own vehicle 102 and the other vehicle A1 reach the entry position Pe at almost the same time. In this situation, negative determinations are made in steps S150 and S160, and the own vehicle 102 is decelerated in step S180. When the first travel time Tₒ becomes greater than T_{y}+α, affirmative determinations are made in steps S200, S230 and S250. Therefore, in step S260, "Can enter after first other vehicle has passed and before following other vehicle passes" is displayed on the display 52.
C3-3: When there are two other vehicles in the roundabout and a distance between them is small (FIG. 16)

FIG. 16 shows a situation where there are two other vehicles A1 and A2 in roundabout 110, a distance between the other vehicles A1 and A2 is small, and the own vehicle 102 and the other vehicle A1 reach the entry position Pe to the roundabout at approximately the same time. In this situation, negative determinations are made in steps S150 and S160, and the own vehicle 102 is decelerated in step S180. When the first travel time Tₒ becomes greater than T_{y}+α, affirmative determinations are made in steps S200 and S230, a negative determination is made in step S250, and the own vehicle 102 is decelerated in step S270. When the first travel time Tₒ is greater than T_{y+1}+α, an affirmative determination is made in step S290, and a negative determination is made in step S320. Therefore, "Can enter after second other vehicle has passed" is displayed on the display 52 in step S330.
C4: When there are no other vehicles in the roundabout

In this case, a negative determination is made in step S30. Therefore, the own vehicle 102 is not decelerated, and "Can enter" is displayed on the display 52 in step S40.

As can be understood from the above description, according to the driving assistance device, method, and program of the present invention, the first travel time Tₒ required for the own vehicle 102 to reach the entry position Pe to the roundabout 110 is estimated (S70), the second travel time T₁ required for the first other vehicle A1 traveling in the roundabout to reach the entry position is estimated (S70), and a determination is made as to whether or not the own vehicle can enter the roundabout based on a relationship between the first and second travel times (S80 to S360).

Therefore, when the own vehicle 102 approaches the entry position Pe to the roundabout 110, it is possible to determine whether or not the own vehicle can enter the roundabout based on the relationship between the travel times required for the own vehicle and the other vehicle to reach the entry position to the roundabout. Therefore, it is possible to determine whether or not to enter the roundabout earlier than when a determination is made as to whether or not other vehicles are aggressive when the own vehicle reaches the roundabout, and a determination as to whether or not to enter the roundabout is made based on the result of that determination.

According to one aspect of the present invention, when the first travel time Tₒ is greater than a sum T₁+α of the second travel time and the first margin time (S150), it is determined that the own vehicle can enter the roundabout 110 after the first other vehicle A1 has passed the entry position (S240). Therefore, compared to where the first margin time is not taken into account, it is possible to more accurately determine that the own vehicle can enter the roundabout after the first other vehicle has passed the entry position to the roundabout.

According to another aspect of the present invention, when the first travel time Tₒ is less than a difference T₁-β between the second travel time and the second margin time (S160), it is determined that the own vehicle can enter the roundabout 110 before the first other vehicle A1 passes the entry position Pe (S170). Therefore, compared to where the second margin time is not taken into account, it is possible to more accurately determine that the own vehicle can enter the roundabout before the first other vehicle passes the entry position to the roundabout.

Further, according to another aspect of the present invention, when the first travel time Tₒ is greater than or equal to the difference T₁-β between the second travel time and the second margin time and less than or equal to the sum T₁+α of the second travel time and the first margin time (S150, S160), it is determined that the own vehicle cannot enter the roundabout 110 (S190). Therefore, when the own vehicle and the first other vehicle reach the entry position to the roundabout at almost the same time, and there is a risk that the own vehicle will enter the roundabout and come close to the first other vehicle, it is determined that the own vehicle cannot enter the roundabout, and a risk of the vehicle coming close to the first other vehicle can be reduced.

Further, according to another aspect of the present invention, when the first travel time Tₒ is less than or equal to the reference value T_{oc}, a determination is made as to whether or not the own vehicle can enter the roundabout (S120). Therefore, in a situation where it takes a long time for the own vehicle to reach the entry position to the roundabout, it is possible to avoid unnecessary early determination of whether or not the own vehicle can enter the roundabout. In particular, when there is a risk that the own vehicle and the first other vehicle will reach the entry position to the roundabout at almost the same time, it is possible to avoid the own vehicle from being decelerated unnecessarily early.

Further, according to another aspect of the present invention, when it is determined that there is an obstacle 116 in the island 118 of the roundabout that prevents the object information acquisition device from acquiring information, and there is another vehicle that has entered the shielded area 120 where the acquisition of information is prevented by the obstacle (S50, S60), the second travel time is estimated for the other vehicle that has entered the shielded area based on information acquired by the object information acquisition device before the other vehicle enters the shielded area (S90).

Therefore, when there is another vehicle that has entered the shielded area where information acquisition is obstructed by the obstacle in the island of the roundabout, it is possible to determine whether or not the own vehicle can enter the roundabout in relation to other vehicles including the other vehicle that has entered the shielded area and the own vehicle.

Further, according to another aspect of the present invention, when the first travel time Tₒ is greater than the sum T₁+α of the second travel time and the first margin time, and there are no other vehicles other than the first other vehicle A1 in the roundabout 110 (S150, S230), it is determined that the own vehicle can enter the roundabout after the first other vehicle has passed the entry position Pe (S240).

Therefore, compared to where the first margin time is not taken into account and where the presence or absence of other vehicles other than the first other vehicle is not determined, it is possible to more accurately determine that the own vehicle can enter the roundabout after the first other vehicle has passed the entry position to the roundabout.

Further, according to another aspect of the present invention, when there is a second vehicle other than the first other vehicle A1 in the roundabout 110 (S230), the third travel time T_{y+1} required for the second other vehicle A2 following the first other vehicle A1 to reach the entry position is estimated, and when the first travel time Tₒ is less than the difference T_{y+1}-β between the third travel time and the second margin time (S250), it is determined that the own vehicle can enter the roundabout after the first other vehicle has passed the entry position and before the second other vehicle passes the entry position (S260).

Therefore, when there is a second other vehicle following the first other vehicle, it is possible to more accurately determine that the own vehicle can enter the roundabout after the first other vehicle has passed the entry position and before the second other vehicle passes the entry position.

Further, according to another aspect of the present invention, the own vehicle has the automatic brake device 36, and when the first travel time Tₒ is greater than or equal to the difference T₁-β between the second travel time and the second margin time, and less than or equal to the sum T₁+α of the second travel time and the first margin time (S150, S160), the own vehicle is decelerated by the automatic brake device (S180), and when the first travel time Tₒ becomes greater than the sum of the second travel time and the first margin time (S200), it is determined that the own vehicle can enter the roundabout after the first other vehicle has passed the entry position (S240).

Therefore, when the own vehicle and the first other vehicle reach the entry position to the roundabout at approximately the same time, and there is a risk that the own vehicle will enter the roundabout too close to the first other vehicle, the own vehicle can be automatically decelerated. In addition, by automatically decelerating the own vehicle, it is possible to more accurately determine when the own vehicle can enter the roundabout after the first other vehicle has passed the entry position.

Further, according to another aspect of the present invention, the own vehicle has the automatic brake device 36, and when the first travel time Tₒ is greater than or equal to the difference T_{y+1}-β between the third travel time and the second margin time (S250), it is determined that the own vehicle cannot enter the roundabout (S280), and the own vehicle is decelerated by the automatic brake device (S270).

Therefore, in a situation where there is a first other vehicle and a second other vehicle in the roundabout and the own vehicle cannot enter the roundabout, it is possible to accurately determine this and automatically decelerate the own vehicle.

Further, according to another aspect of the present invention, when the first travel time Tₒ becomes greater than the sum T_{y+1}+α of the third travel time and the first margin time (S290), it is determined that the own vehicle can enter the roundabout after the first and second other vehicles have passed the entry position (S330).

Therefore, in a situation where there are the first and second other vehicles in the roundabout and the own vehicle is being decelerated, when the first and second other vehicles have passed the entry position and thus the own vehicle become possible to enter the roundabout, it is possible to accurately determine that.

Further, according to another aspect of the present invention, when there is a preceding vehicle between the own vehicle 102 and the roundabout 110, it is not determined whether or not the own vehicle can enter the roundabout (S20). When there is a preceding vehicle between the own vehicle 102 and the roundabout 110, the possibility of the own vehicle entering the roundabout depends on movement of the preceding vehicle. Accordingly, according to the above aspect, it is possible to reduce the risk that whether or not the own vehicle can enter the roundabout is inappropriately determined due to the movement of the preceding vehicle.

In particular, according to the embodiment, when step S320 is executed and a negative determination is made in step S340, y is incremented to y+1 in step S360 and steps S270 and thereafter are executed. Therefore, even in a situation where there are three or more other vehicles in the roundabout, it is possible to determine whether or not the own vehicle can enter the roundabout, and if necessary, the own vehicle can be automatically decelerated.

Although the present invention has been described in detail with reference to the specific embodiment, it will be apparent to those skilled in the art that the present invention is not limited to the above-described embodiment, and various other embodiments are possible within the scope of the present invention.

For example, in the above-mentioned embodiment, a driver is notified by the display 52 indicating whether or not the own vehicle can enter the roundabout. However, the notification to the driver may be given by voice, or by both the display and voice.

In the above-mentioned embodiment, when the own vehicle and the first other vehicle reach the entry position to the roundabout almost at the same time, the own vehicle is automatically decelerated. However, instead of automatically decelerating the own vehicle, the driver may be prompted to decelerate the own vehicle.

In the above-mentioned embodiment, the first margin time α and the second margin time β are positive constants, but they may be set to be variable according to length of the other vehicles traveling in the roundabout, so that the longer the other vehicles are, the larger the margin times become.

In the above-mentioned embodiment, operation status of the turn signals of other vehicles approaching the entry position to the roundabout is not determined. When turn signals of the first other vehicle is activated and the first other vehicle is about to move to an oncoming lane adjacent to the vehicle lane 112A, the first other vehicle may be excluded from the other vehicles traveling in the roundabout.

Furthermore, in the above-mentioned embodiment, when a negative determination is made in step S340, y is incremented to y+1 in step S360 and steps S270 and thereafter are executed. However, when a negative determination is made in step S340, since there are many other vehicles traveling in the roundabout, an indication whether or not the own vehicle can enter the roundabout is not determined may be displayed on the display 52, and the determination whether or not the own vehicle can enter the roundabout may be terminated.

Furthermore, in the above-mentioned embodiment, roads are right-hand traffic, and traveling in the roundabout is in the counterclockwise direction. However, the driving assistance device, method and program of the present invention may also be applied in countries where roads are left-hand traffic and traveling in the roundabout is in the clockwise direction.

## Claims

1. A driving assistance device (100) that includes an object information acquisition device (18) for acquiring information on objects in front of an own vehicle (102) and an electronic control unit (10) that is configured to execute driving assistance control when the own vehicle enters a roundabout (110) in front of the own vehicle by acquiring information on the roundabout and determining whether or not the own vehicle can enter the roundabout based on acquired information on the roundabout and information on the objects acquired by the object information acquisition device, and notifying a driver of a result of the determination (S70-S360), **characterized in that**
the electronic control unit (10) is configured to estimate a first travel time (Tₒ) required for the own vehicle to reach an entry position (Pe) to the roundabout (S70), to estimate a second travel time (T₁) required for a first other vehicle traveling in the roundabout to reach the entry position (S70), and to determine whether or not the own vehicle can enter the roundabout based on a relationship between the first and second travel times (S80-S360).

2. The driving assistance device according to claim 1, wherein the electronic control unit (10) is configured to determine that the own vehicle (102) can enter the roundabout (110) after the first other vehicle (A1) has passed the entry position (S240), when the first travel time (Tₒ) is greater than a sum (T₁+α) of the second travel time and a first margin time (S150).

3. The driving assistance device according to claim 2, wherein the electronic control unit (10) is configured to determine that the own vehicle (102) can enter the roundabout before the first other vehicle (A1) passes the entry position (Pe) (S170), when the first travel time (Tₒ) is less than a difference (T₁-β) between the second travel time and a second margin time (S160).

4. The driving assistance device according to claim 3, wherein the electronic control unit (10) is configured to determine that the own vehicle (102) cannot enter the roundabout (S190), when the first travel time (Tₒ) is greater than or equal to the difference (T₁-β) between the second travel time and the second margin time and less than or equal to the sum (T₁+α) of the second travel time and the first margin time (S150, S160).

5. The driving assistance device according to claim 1, wherein the electronic control unit (10) is configured to determine whether or not the own vehicle (102) can enter the roundabout, when the first travel time (Tₒ) is less than or equal to a reference value (T_{oc}) (S120).

6. The driving assistance device according to claim 1, wherein the electronic control unit (10) is configured, when the electronic control unit determines that there is an obstacle (116) in an island (118) of the roundabout that prevents the object information acquisition device (18) from acquiring information and that there is another vehicle as the first other vehicle that has entered a shielded area (120) where acquisition of information is prevented by the obstacle, based on the acquired information on the roundabout or the information on objects acquired by the object information acquisition device (S50, S60), to estimate the second travel time (Tₘ) for the first other vehicle that has entered the shielded area based on the information acquired by the object information acquisition device before the first other vehicle enters the shielded area (S90).

7. The driving assistance device according to claim 2, wherein the electronic control unit (10) is configured to determine that the own vehicle (102) can enter the roundabout (110) after the first other vehicle (A1) has passed the entry position (S240), when the first travel time (Tₒ) is greater than the sum (T₁+α) of the second travel time and the first margin time and there is no other vehicle in the roundabout other than the first other vehicle (S150, S230).

8. The driving assistance device according to claim 3, wherein the electronic control unit (10) is configured, when there is another vehicle following the first other vehicle as a second other vehicle (A2) in the roundabout (S230), to estimate a third travel time (T_{y+1}) required for the second other vehicle to reach the entry position (Pe), and to determine that the own vehicle (102) can enter the roundabout after the first other vehicle has passed the entry position and before the second other vehicle passes the entry position (S260), when the first travel time (Tₒ) is less than a difference (T_{y+1}-β) between the third travel time and the second margin time (S250).

9. The driving assistance device according to claim 4, wherein the own vehicle (102) has an automatic brake device (36), and the electronic control unit (10) is configured to decelerate the own vehicle using the automatic brake device (S180), when the first travel time (Tₒ) is greater than or equal to the difference (T₁-β) between the second travel time and the second margin time and less than or equal to the sum (T₁+α) of the second travel time and the first margin time (S150, S160), and to determine that the own vehicle can enter the roundabout after the first other vehicle has passed the entry position (S240), when the first travel time becomes greater than the sum of the second travel time and the first margin time (S200).

10. The driving assistance device according to claim 8, wherein the own vehicle (102) has an automatic brake device (36), and the electronic control unit (10) is configured to determine that the own vehicle cannot enter the roundabout and to decelerate the own vehicle using the automatic brake device (S270, S280), when the first travel time (Tₒ) is greater than or equal to the difference (T_{y+1}-β) between the third travel time and the second margin time (S250).

11. The driving assistance device according to claim 10, wherein the electronic control unit (10) is configured to determine that the own vehicle (102) can enter the roundabout after the first other vehicle and the second other vehicle have passed the entry position (S330), when the first travel time (Tₒ) becomes greater than a sum (T_{y+1}+α) of the third travel time and the first margin time (S290), in a situation where the own vehicle is decelerated by the automatic brake device (S270).

12. The driving assistance device according to claim 1, wherein the electronic control unit (10) is configured not to determine whether or not the own vehicle (102) can enter the roundabout (110), when there is a preceding vehicle between the own vehicle and the roundabout (S20).

13. A driving assistance method for executing driving assistance control when an own vehicle (102) enters a roundabout (110), including: acquiring information on a roundabout in front of the own vehicle (S10); acquiring information on objects in front of the own vehicle (S30); determining whether or not the own vehicle can enter the roundabout based on acquired information on the roundabout and objects; and notifying a driver of a result of the determination (S70-S360), **characterized in that**
the driving assistance method further includes: estimating a first travel time (Tₒ) required for the own vehicle to reach a entry position (Pe) to the roundabout (S70), estimating a second travel time (T₁) required for a first other vehicle (A1) traveling in the roundabout to reach the entry position (S70), and determining whether or not the own vehicle can enter the roundabout based on a relationship between the first and second travel times (S80-S360).

14. A program for executing driving assistance control when an own vehicle (102) enters a roundabout (110), including: acquiring information on a roundabout in front of the own vehicle (S10); acquiring information on objects in front of the own vehicle (S30); determining whether or not the own vehicle can enter the roundabout based on acquired information on the roundabout and objects; and notifying a driver of a result of the determination (S70-S360), **characterized in that**
the driving assistance method further includes: estimating a first travel time (Tₒ) required for the own vehicle to reach a entry position (Pe) to the roundabout (S70), estimating a second travel time (T₁) required for a first other vehicle (A1) traveling in the roundabout to reach the entry position (S70), and determining whether or not the own vehicle can enter the roundabout based on a relationship between the first and second travel times (S80-S360).
